# EUROPEAN PATENT SPECIFICATION

(11) **EP 2 211 500 B1**
(45) Date of publication and mention of the grant of the patent: **20.01.2016**
(21) Application number: 09151314.3
(22) Date of filing: 26.01.2009
(51) Int. Cl.: H04L 12/14, H04L 29/08, G06Q 30/02, H04M 1/725

(54) **Access control with reward mechanism**
Zugriffssteuerung mit Belohnungsmechanismus
Contrôle de l'accès avec mécanisme de récompense

(43) Date of publication of application: 28.07.2010
(73) Proprietor: Comptel Corporation, 00180 Helsinki (FI)
(72) Inventor: Korpi, Harri, FI-00810, Helsinki (FI); Dufault, Francis, FI-01350, Vantaa (FI)
(74) Representative: Seppo Laine Oy

(56) References cited:
- EP-A- 1 876 561
- WO-A-01/20506
- US-A- 5 333 186
- US-B1- 6 590 970

## Description

### Technical Field

The present invention relates to methods, systems and computer program products for controlling access by a subscriber of a mobile network to a first service in a second network.

In particular, the present invention relates to such access control methods that can grant access in return for some act desired by the controller. The act allowing such a reward can be, for example the subscriber consuming a predefined service or giving an input. Such services and inputs include advertisements and questionnaires, for instance.

Therefore, the present invention relates also to technical means that can be utilized in mobile marketing.

Mobile marketing in communications networks has been a hot topic for a couple of years. However, this has not been such a success than earlier was imagined. The subscribers and users have found the mobile marketing and advertising systems used in communications networks somewhat difficult and time consuming. Also the focusing of the advertisements has been an issue that has not been tackled properly enough, even though the customer relations management systems have offered lots of possibilities to utilize subscribers' ages, tenders, interests, etc.

### Background Art

Current mobile advertisement solutions typically include:
a) Sending direct advertisement messages such as SMS, MMS to the subscribers' terminal;
b) Modifying message content, e.g. SMS and MMS, to add advertisements as headers or footers;
c) Showing advertisements in separate applications;
d) Showing banners on the web-pages; or
e) Allowing some sponsored content such as ring-tones etc to be downloaded for free.

US patent application publication 2008/0287096 presents an access control system based on monitoring device, which makes decision on whether a service requested by a consumer is a sponsored service to the specific consumer or not based on sponsoring rules. The solution enables advertisers to offer free or discounted content and services identified by URL mapping to the mobile subscribers.

US-A-5 333 186 discloses a sponsored-call service that enables callers to obtain network-provided telecommunication services toil-free or at a subsidized rate. The sponsored-call service permits a third party sponsor to convey commercial messages to and interact with a caller prior to the caller's access to the network-provided services. After the caller's interaction with the sponsor, the network gives the caller a sponsored-specified restricted access to the network-provided services.

WO 01/20506 A and EP-A-1876561 disclose methods and systems according to the preambles of claims 1 and 9.

No public implementation has presented an efficient way to handle subscribers' accounts within novel IP Multimedia Subsystem (IMS) networks.

### Disclosure of Invention

It is an object of the present invention to create a new method, system and computer program product for controlling access by a subscriber of a mobile network to a first service in a second network. Ideally, such a new access control technology would provide reliable access control together with flexible reward mechanisms.

The invention provides a new method, system and computer program product according to claims 1, 9 and 12, respectively.

The method comprises controlling access by a subscriber of a mobile network to a first service in a second network via a gateway node between the mobile network and the second network. The method comprises receiving, at a gateway node, a request by the subscriber for access to the first service within a Packet Data Protocol context, PDP context. The request is followed by identifying the subscriber and the requested first service by analysing at least part of the content of the PDP context. Furthermore, the method comprises selecting a second service in the second network and a release condition relating to the second service. Thereafter, the subscriber is redirected and locked to the selected second service, which means granting access only to the selected second service in the second network. The set release condition is monitored, and when the release condition is fulfilled, the locking of the subscriber is released. The release means granting access via the gateway node to the first service desired by the subscriber. In order to perform these steps, the PDP context is monitored, and when necessary modified.

At least in some applications, the invention also helps the service providers in achieving reliable access control and flexible reward mechanisms. The reliable access control and flexible reward mechanisms are attributable to the utilization of the gateway node between the mobile network and the second network, and also to the particular steps of redirection and locking, followed by the later release on or after fulfilment of the release condition.

Examples of the embodiments and operating environment include controlling access from a 2G, 3G, 4G or IMS network to the Internet. Then, a Gateway GPRS Support Node, GGSN; a System Architecture Evolution Gateway, SAE GW; or an Application Server, AS, or a combination thereof can be utilized as the gateway node.

The inventive concept allows also several useful and advantageous embodiments, which provide further advantages and new possibilities for mobile marketing.

For example, the present invention provides a novel way to show advertisements in communications networks. Furthermore, an embodiment of the invention identifies the prepaid subscriber and via user led commands allows the subscriber to sign optionally into or out of a service delivering short advertisements. Once the advertisement has been viewed, the subscriber is rewarded with browsing quota. According to an embodiment of the invention, the system keeps track of which advertisements the subscriber has viewed during a defined period and ensures that the subscriber receives different advertisements each time the process is initiated or in any other way the advertiser has chosen the advertisements to be shown. Yet an embodiment of the invention records the data volumes that the subscriber has used and information on which advertisements have been shown to the subscriber. The recorded information can be used for reporting and billing purposes.

What has been missing so far is a centralized way to enable service delivery linked directly to the advertisement in mobile data and IMS networks with minimal impact to the other existing network elements. What makes embodiments of the present invention particularly interesting is the fact that they put the network operators back to the drivers seat with the control of the mobile data advertising, but yet allowing the other players to keep their current functions, such as the www-news agencies to display the advertisement banners on their websites or the restaurant keepers to send targeted SMS' to their customers etc.

The embodiments can be used for access control of subscribers who earn the credit for communication by receiving messages. Within the conceptual idea of the invention the credit can be for instance time, data transfer volume or anything somehow measurable value, even money. The advertisement messages can be for instance visual and/or audible messages such as short message, multimedia message, web page, video movie, etc, practically any content that can be displayed in the WWW and shown by the particular handset and the application. In some implementations according to an embodiment of the invention, the subscriber can himself affect the advertisement content by responding them with his terminal. The response may be given for example by browsing the advertisement through and by selecting the most suitable of the given options. For example a soft drink manufacturer could build an advertisement where in the first page the subscriber is asked to choose his favourite of the soft drinks 1, 2 and 3, and a different advertisement could be shown based on the selection. However, building and the actual format (e.g. html, video, sound, etc) of the advertisements are outside of the scope of this invention i.e. it is left to the advertisement people to be innovative and find new ways to use the technical embodiments of our invention in order to offer new and better subscriber experience.

In an embodiment of the invention, an advertisement system allows operators to show advertisements to subscribers before allowing the subscribers to the actual communications services such as messaging, browse internet or use certain service etc. According to an embodiment, the advertisement system makes it possible to give discount or offer free of charge communication services for a certain time period or a specific amount of volume, for instance.

In an implementation of the system operators allow an advertisement based internet browsing and data transfer service to their subscribers. At first, the possible subscribers to whom the advertisements are offered have to be identified. Also the advertisements have to match against the subscriber's personal information such as age, tenders, interests and so on. The subscriber is identified by his/her telephone number (IMSI, MSISDN, email address, etc) and/or the number of the terminal (equipment identification). After the identification, the subscriber is redirected to e.g. a web-page containing an advertisement. During showing the advertisement to the subscriber, he/she is locked to a web-page where the advertisement is located and is not able to browse to another location at the moment. The locking can be timer based or response based. In an embodiment of the invention, the locking can be implemented from the advertisement system for instance by giving commands downwards in the network by using Diameter protocol. In some embodiments the subscriber can give response on the advertisement he/she has seen, for example to rate the advertisement or give his/her opinion on the advertisement. When the advertisement has become to end, the lock is released. The process may be continued by rewarding the subscriber also on the basis that the advertisement server has received the subscriber's opinion. As a reward of watching the advertisement, the subscriber is for example allowed to browse for free or with discounted price for certain amount of time or volume. Due to the configurable nature of the system, multiple rewarding scenarios are also possible.

In an embodiment of the invention it is possible to advertise in novel communications networks such as 3G and IMS before the actual communications service is deployed. In the embodiment the Diameter protocol (described in RFC 3588 and RFC 4006 and also further specified by 3GPP) is utilized to carry out an efficient interaction between the subscriber, advertisement system and the communications network. In this context, the service means granting quota to subscribers by means of Diameter specifications. The granted quota is generally defined as an amount of volume or time for transferring data but it can also be for example money or any service specific units. According to an embodiment of the invention, the redirect and restrict commands are used in efficient way to guarantee reliable functioning of advertisement system. The advertisements are held on the system in URL format so that the actual advertisement content is completely under the control of the advertiser and the advertisements can be either static or interactive i.e. an advertisement that expects to have some user involvement. The subscriber's browsing is temporarily limited only to the given URL(s) of advertisement. When the advertisement has been successfully presented to the subscriber, a certain amount of quota is granted to the subscriber. The quota is typically some amount of data transfer opportunity, such as 5 megabytes, for example. The granted quota can also be time based use, such as 10 minutes of data browsing or 20 messages of short messages or multimedia messages or practically any combination etc.

In another embodiment of the invention, the system is connected to 3G network via Gateway GPRS Support Node (GGSN) and to IP Multimedia Subsystem (IMS) network via GGSN and application servers. In some embodiments the system does not necessarily have a connection to billing system but in a preferred embodiment of the invention i.e. when operator wants to charge the subscribers for the services, the system is connected for example to mediation system, directly to the billing system, Online Charging System (OCS), Offline Charging System (OFCS) etc and GGSN. The GGSN is configured to create and transmit charging data either to OCS or OFCS where the advertisement system is deployed to one of the OCS channels: The used protocol is preferably Diameter since it is the protocol of choice in IMS networks. The whole system contains means and logic for choosing the advertisements; subscriber databases including information on subscribers' ages, gender, interests, etc; advertisement databases including the URLs of the advertisements and the campaigns, restrictions, target definitions, validity, quota granting amounts, etc; reporting database including information on shown advertisements, data transfer amounts, etc; means and logic for generating reports and billing information; means for advertisers to manage their advertisements and means for operator to manage the whole system and network.

In a preferred embodiment of the invention the actual advertisements are not located in the advertisement system. The advertisement system only contains the URLs and other relevant controlling means relating to advertisements. Yet in embodiments of the invention where billing is important, the advertisement system is connected to respective elements in the network; such as OCS and OCFS in IMS networks. Furthermore, the mediation systems can be used within the advertisement system. In an embodiment of the invention the subscriber is identified by for example his MSISDN number, the service is mapped to a particular URL according to subscriber's profile and the advertisements available in the system. The subscriber is redirected to the advertisement, granted quota after showing successfully the advertisement and permitted to use the actual service. In an embodiment of the invention this all is done within a one session but it is also possible to share the quotas i.e. rewards over multiple sessions. According to an embodiment of the invention the advertisements or at least the relevant information relating to advertisements can be billed for advertisers. This can be implemented by the central logic part of the advertisement system or mediator.

Yet in another embodiment of the invention the actual workload of different network elements is shared in a following way. The GGSN classifies the actual traffic; the policy server activates GGSN's charging channel, the advertisement system decides the showing time of advertisements, controls the locking of Packet Data Protocol (PDP) contexts to GGSN. Also the advertisement system takes care of releasing the lock of PDP contexts, granting the quota to subscribers and handling the used quota. All the network elements generating billing data take care of its own billing data creation and delivering it to the billing system. This can be done also with a mediator device efficiently and in a controlled way. The billing can be designated to the subscribers, advertisers and all of the parties involved with the advertising. The advertisement system takes care of creating the billing data of the advertisers either by straight Call Detail Records (CDR) to the billing system or by calling straight through to the advertisers external management systems. This billing information can include for instance following information on the advertisements: how many times the advertisements have been shown in total and for unique subscribers during a specific time; the amount of transferred data or combination of this kind of information.

As is apparent from the above discussion, embodiments of the invention solve several technical problems relating to advertisement services and can be utilized in several different applications.

### Brief Description of Drawings

For a more complete understanding of the present invention and the advantages thereof, the invention is now described with the aid of the examples and with reference to the following drawings, in which:
Figure 1 presents a block diagram of an example of environment according to an embodiment of the invention.
Figure 2 presents a block diagram of an activation use case according to an embodiment of the invention.
Figure 3 presents a block diagram of another use case according to an embodiment of the invention.
Figure 4 presents a block diagram of a stand-alone mode system according to an embodiment of the invention.
Figure 5 presents a block diagram of a proxy mode system according to an embodiment of the invention.
Figure 6 presents a block diagram of a full mode system according to an embodiment of the invention.
Figure 7 presents a flow diagram of a request handling logic according to an embodiment of the invention.
Figure 8 presents a flow diagram of an activation request handling logic according to an embodiment of the invention.
Figure 9 presents a flow diagram of a data import request handling logic according to an embodiment of the invention.
Figure 10 presents a block diagram of the main modules of the advertisement system according to an embodiment of the invention.
Figure 11 presents a sequence diagram of the interaction between the different elements in static advertisement case according to an embodiment of the invention.
Figure 12 presents a sequence diagram of the interaction between the different elements in dynamic activation advertisement case according to an embodiment of the invention.
Figure 13 presents a block diagram of the IMS network as specified in 3GPP TS 29.212 v8.0.0 and some components according to an embodiment of the invention.
Figure 14 presents a block diagram of the interaction between the different elements during the activation key exchange during a reward activation process according to an embodiment of the invention.
Figure 15 presents a block diagram of the interaction between the different elements during the reference key exchange during a data import process according to an embodiment of the invention.

### Best Mode for Carrying Out the Invention

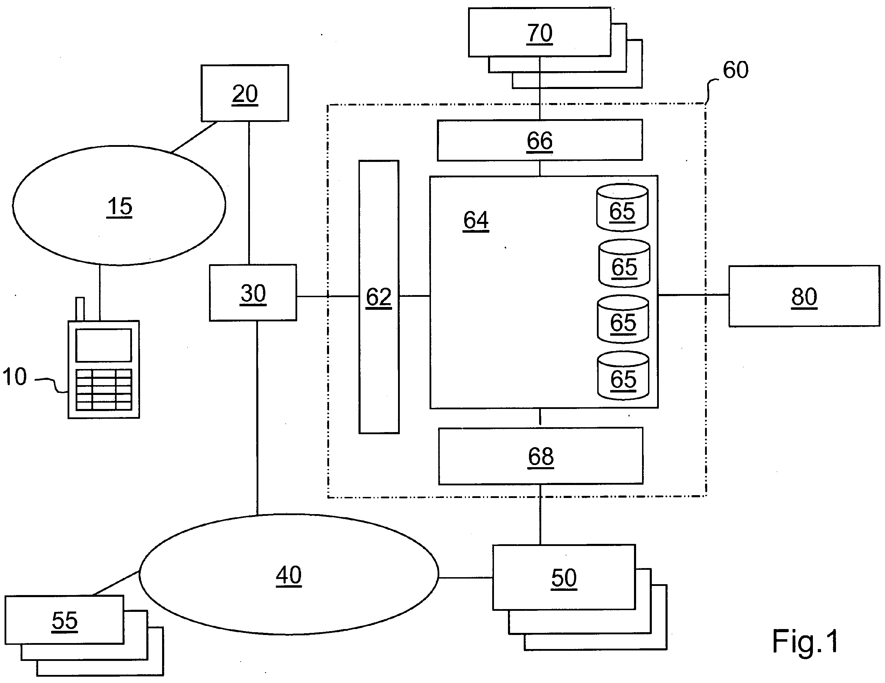

Figure 1 presents an example of an environment according to an embodiment of the invention. A subscriber 10 is connected to operator's communication network via a wireless network 15, for example 3G and IMS, which also contains several connection and controlling points, namely for example SGSNs 20, GGSNs 30, routers, etc. Behind the wireless network are the service networks such as internet 40 etc. According to an embodiment of the invention the subscribers' accounts are handled by mediation devices 80 enabling functions such as advertisers' billing and reporting etc. In an embodiment of the invention the advertisement system 60 contains different types of databases 65 such as database DB1 for subscriber data, DB2 for advertisement data and DB3 for usage data and DB4 for temporary session data. All or part of the databases can be replaced also by external system 70 calls. The external system can be, for example, operator's CRM system or equal. The actual advertisement data can be added into the system, for example, through a separate web GUI interface in an interface module 68. Also the subscriber data (age, gender, interests, etc) can be added to the system through the interface module 68 to intranet and internet. Furthermore the advertisement system 60 contains the central logic 64, which is configurable and customizable to all kind of advertising solutions. The central logic 64 also decides when a new advertisement should be shown and when the subscriber 10 is rewarded and granted quota. In proxy usage, the central logic 64 also contains the rules when and how the OCS 84 or OFCS 82 is called or it can even contain some simple mediation activities 80 such as calling external systems 70, for example separate rating or billing systems. Also the central logic 64 needs to produce the data that is used for billing the actual advertisers. The billing data can be based on, for example, used units, granted units or cost-per-show etc or any combination of these. The advertisement system 60 is responsible for producing the data but it is then the task of an external/internal mediation solution 80 to process the data for the actual billing.

In an embodiment of the invention, the advertisement system 60 receives service requests from GGSN 30. The service request is identified and the advertisement system 60 gives commands back to GGSN 30. The identification and possible charging can be done with a method described in the patent publication US 7,391,854 of the same applicant.

In an embodiment of the invention the advertisement system 60 has an interface 62 towards the network elements. The interface 62 translates the commands into the format that the central logic 64 can understand or respectively the GGSN 30 or other network element can understand. One suitable protocol is the Diameter protocol. When a subscriber 10 has authenticated and authorized to get advertisements the advertisement system 60 activates and shows the actual advertisements. This can be done with several of protocols, such as http protocol. After the advertisements have been shown, the advertisement system 60 receives reward activations from the content servers 50 via the interface module 68. Further, the interface module 68 triggers the central logic 64 to free the session for actual communication purposes. In an embodiment of the invention the activation request can include possible other forms of data that can be used later to target the advertisements for that particular subscriber.

In an embodiment of the invention the advertisement system 60 interfaces with the network elements such as GGSN 30. The interfacing is accomplished by replaceable interface modules 62 such as Diameter module, which translates the network protocol commands into an internal system format and vice versa. Commands that are sent towards the network elements are composed of separate commands such as redirect, grant quota, deny and re-authorise commands. Advertisement system 60 might interface also to the content server 50 i.e. the actual www server containing the actual advertisement. The connection requires naturally a firewall 35 in the middle guaranteeing only authorised servers 50 being able to connect to the system 60. This is required since the content servers 50 are located in the public internet 40. The purpose of the interface module 68 is to allow the content server 50 to send reward activation command to the advertisement system 60. One possible scenario of such a case is when an advertisement would contain a rate button and by pressing the button the content server 50 would trigger an activation command, for example over http, towards advertisement system 60 which would then activate the reward and start a process for freeing the PDP context and granting the reward to the subscriber 10. Additionally, this request could contain some data that could be used to target the advertisements later such as the result of the rating. This could then allow targeting the advertisements next time, for example, only to persons who rated previous advertisement with higher than 'good'. The main component of the system 60 is the central logic 64, which controls the advertisement selection and the time when they are shown. It decides also when and how much quota is granted and under which conditions. Furthermore, the central logic 64 is configurable so that it can interface with other backend elements such as OCS, OFCS, CRM etc if required.

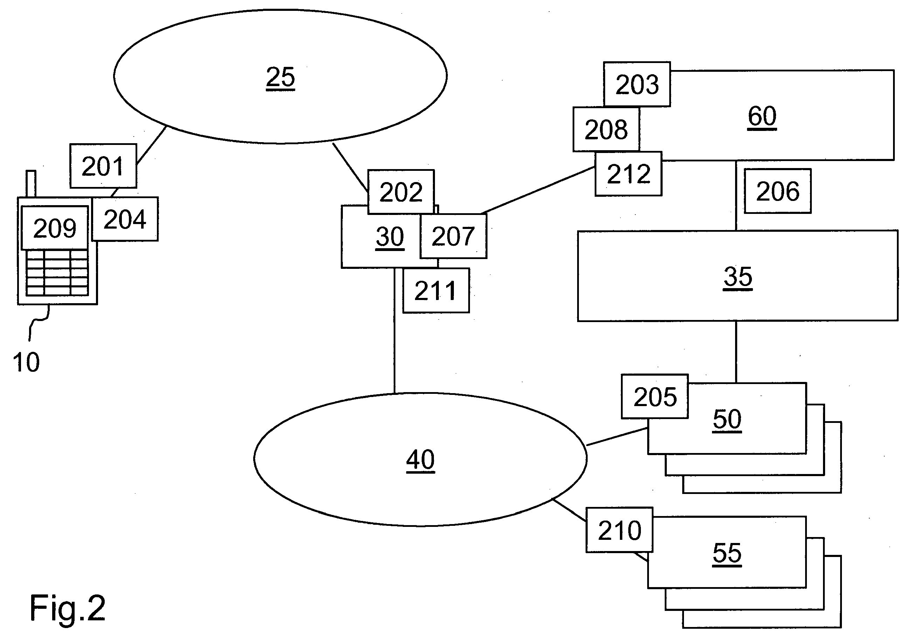

Figure 2 presents an activation use case according to an embodiment of the invention. This use case refers to a situation where a subscriber 10 wants to use his terminal for web browsing. At phase 201 the subscriber opens a web browser in his terminal and types in a desired www address. The initialisation of the session starts and the session proceeds in communications network 25 to GGSN 30, which is a gateway from mobile network to internet. In phase 202 the GGSN 30 identifies the traffic to be under online credit control by for example querying policy server and triggers a quota request towards the advertisement system 60. In reality, the first quota request might require separate session initialization message exchange but it is omitted here due to simplicity. In phase 203 the advertisement system 60 receives a quota request. The central logic 64 of the advertisement system 60 selects an advertisement to be shown to the subscriber 10 and sets the redirection command to GGSN 30 to the specified URL. The advertisement selection might also use data received in the GGSN request such as location, service type etc. The redirection command can also include possible browsing options also called as restrictions set. Such restrictions can include allowed browsing domain, for example the advertisement system 60 can allow the subscriber 10 to browse content under the advertisement domain to enable interactive advertisements. The advertisement system 60 can also set up timer values or for example give commands to the www server as URL parameters. In phase 204 the subscriber 10 gets redirected to a www page containing an advertisement. In phase 205 the advertisement is shown. The advertisement might contain some inter-activeness such as click-through, multiple choices or a rate button. After a specific event e.g. button press or timer the content server 50 triggers an event towards the advertisement system 60 through the firewall 35 guarding the operator's internal network. The firewall 35 restricts access by unauthorized entities to the advertisement system 60. This is because the actual advertisement is located in the public internet 40 and only trusted hosts should be allowed to have access to the advertisement system 60.

In phase 206 the advertisement system 60 receives an activation command to the particular session. Note that by default, the content server 50 and the advertisement system 60 doesn't have access to the same information i.e. where the advertisement system 60 knows subscriber's profile or at least for example IMSI/MSISDN, which it uses in identifying the subscriber, and the session-id, which identifies the data session, but the content server 50 doesn't know any of these - it only sees a http request coming in from some IP address. On the other hand the content server 50 can be preconfigured to send an activation request to the advertisement system's 60 activation side's HTTP servers for instance, but also the advertisement system 60 has to be able to map the request to a particular data session. Therefore a simple method for sharing the activation-key is needed. For this purpose the advertisement system 60 might include URL parameters to the redirect command when needed. The URL parameters act as an activation key that the HTTP server needs to return to the advertisement system 60 in order to activate the reward. It is also possible to add encryption or some other methods to the activation for security purposes. For example if the advertisement would be located in www.comptel.com/advert.htm the advertisement system 60 would set the redirection into an url: www.comptel.com/advert.htm?activation_key=abc123 and when the advertisement server triggers activation, it would return the key or some encrypted etc value of it in the activation request. After receiving the activation command the advertisement system 60 activates the reward and it triggers a re-authorization command towards GGSN 30 in order to start a process to free the PDP context that has been limited to the advertisement domain in previous steps.

In phase 207 the GGSN 30 frees the locking of the session causing the session to request quota. In phase 208 the advertisement system 60 receives the quota request from GGSN 30 and it grants the rewarded units; time or volume for example. Note that in the proxy deployment a query to OCS 84 might be needed for prepaid subscribers. In phase 209 the subscriber 10 can now use freely the desired service 55 until the granted quota is spent or his prepaid account is empty in proxy deployment. In phase 210 the service can locate anywhere in internet. When the quota runs out in phase 211 the GGSN 30 triggers a new quota request towards the advertisement system 60. Quota request occurs when the previous quota is spent or some trigger event is encountered etc. In phase 212 the advertisement system 60 receives a new quota request. The advertisement system 60 checks if there is any quota left. In case of no quota is left, the advertisement system 60 chooses the next advertisement from the database 65 and commands the GGSN 30 to redirect the traffic to the given URL containing the advertisement likewise in phase 204.

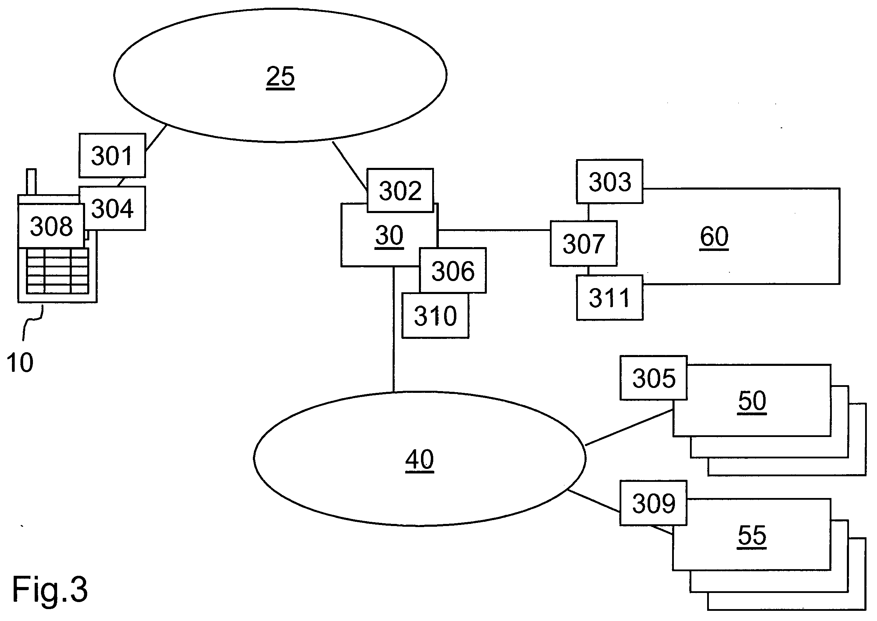

Figure 3 presents another use case according to an embodiment of the invention. This use case also refers to a situation where a subscriber 10 wants to use his terminal to web browsing. At phase 301 the subscriber 10 opens a web browser in his terminal and types in a desired www address 55. The initialisation of the session starts and the session proceeds in communications network to GGSN 30, which is a gateway from mobile network to internet. In phase 302 the GGSN 30 identifies the traffic to belong to the subscriber 10 who wants to have internet session. After identification the GGSN 30 forwards the quota request to the advertisement system 60. In phase 303 the advertisement system 60 receives a quota request. The central logic 64 of the advertisement system 60 selects an advertisement to be shown to the subscriber 10 and sets the redirection command to GGSN 30 to the specified URL. The redirection command can also include possible browsing options also called as restrictions set including with timer value set. The browsing can be limited completely or partly into a specific URL(s) in order to allow subscriber to follow links in the advertisement. The timer value defines a time how long the subscriber is kept in the advertisement page. In phase 304 the subscriber 10 gets redirect to the www page 50 containing an advertisement. In phase 305 the advertisement is shown until the timer value expires causing the subscriber session to be freed. In phase 306 the GGSN 30 realizes that the timer value has expired and the PDP context is freed. After that the GGSN 30 triggers a quota request towards the advertisement system 60. In phase 307 the advertisement system 60 receives the quota request from GGSN 30, now it finds a valid quota reward and grants the rewarded units. In phase 308 the subscriber 10 can now use freely the service until the granted quota is spent. In phase 309 the desired service 55 can locate anywhere in Internet 40. In phase 310 the GGSN 30 triggers a new quota request towards the advertisement system 60 when, for example, the granted service units are spent. In phase 311 the advertisement system 60 receives a new quota request. The advertisement system 60 checks if there is valid quota left. In case of no valid quota is found, the advertisement system chooses the next advertisement from the database 65 and commands the GGSN 30 to redirect the traffic to the given url of the next advertisement likewise in phase 304.

In next figures, the advertisement system is presented in more detail with alternative implementation embodiments.

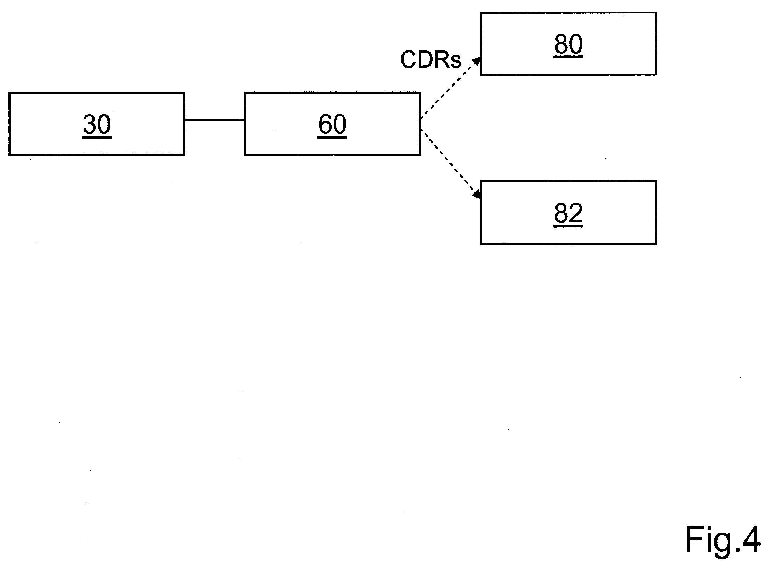

Figure 4 presents a stand-alone mode system according to an embodiment of the invention. The stand-alone mode system comprises at least the following components: GGSN 30, advertisement system 60, mediator 80 and/or OFCS 82. In the present context, the stand-alone mode means a deployment wherein the advertisement system doesn't connect to any external subscribers' billing systems. This kind of embodiment is suitable for situations when offering free services such as browsing for the subscribers. In this embodiment GGSN 30 connects to the advertisement system through its online charging interface, the advertisement system 60 sends redirection commands to the GGSN and grants reward quota. Note that although the advertisement system wouldn't bill the subscribers it still needs to create data that is used for billing the advertisers. Therefore, advertisement system 60 either writes CDRs that are later processed by the mediation platform 80 or it might send the billing data to offline system 82. In a typical embodiment the GGSN 30 sends a first quota request to a particular subscriber's session to advertisement system 60, which chooses next advertisement to be shown and commands GGSN 30 to redirect the traffic to the particular location for a particular duration. After the timer value expires, GGSN 30 triggers another quota request to the same session to the advertisement system 60, which now finds valid quota reward and grants it to the GGSN 30, which then allows subscriber 10 to use the service. When the service units are spent, GGSN 30 triggers another quota request towards the advertisement system 60. Advertisement system 60 writes a CDR for advertisers' billing purposes, before choosing the next advertisement and commanding the GGSN 30 to redirect the traffic to the advertisement URL.

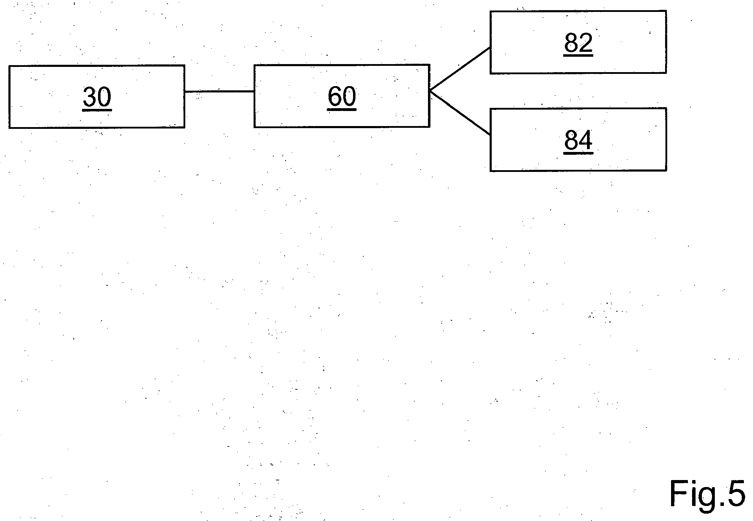

Figure 5 presents a proxy mode system according to an embodiment of the invention. The proxy mode system comprises at least the following components: GGSN 30, advertisement system 60, OFCS 82 and OCS 84. This embodiment allows the operators both showing the advertisements to the subscribers and billing them for the used services. Advertisers' billing is omitted in the picture to keep it simple but the principle described in Figure 4 applies. In this embodiment, advertisement system 60 acts as a proxy between GGSN 30 and the billing systems, OCS 84 and OFCS-82 (prepaid and postpaid billing systems). In this embodiment, the advertisement system forwards modified requests from GGSN 30 to the billing systems 82 and 84 during the session. Some of the GGSN 30 requests can be fulfilled by the advertisement system 60 without forwarding the request to the billing system where some cannot. In typical embodiment for prepaid subscribers GGSN 30 sends a quota request to the subscriber, after choosing the specific advertisement, the advertisement system 60 triggers a quota reservation request with the reward units to the OCS 84. After the quota request has been done, the advertisement system 60 commands the GGSN 30 to redirect the subscriber's traffic to the advertisement location, using timer for example. After the timer expires, GGSN 30 triggers another quota request towards advertisement system 60 which can now grant the rewarded quota straight back to the GGSN 30 without interacting with the OCS 84. When the subscriber has used the rewarded units, GGSN 30 triggers another request reporting the previous usage and possibly requesting more quotas. Advertisement system 60 might now decide that a new advertisement needs to be shown and it behaves in the same way as with the first request, except that it also reports the used amount to the OCS 84 to confirm the previous quota reservation. Naturally there are multiple possible message flows and interaction options. For postpaid user instead of OCS 84 an OFCS 82 system might be called.

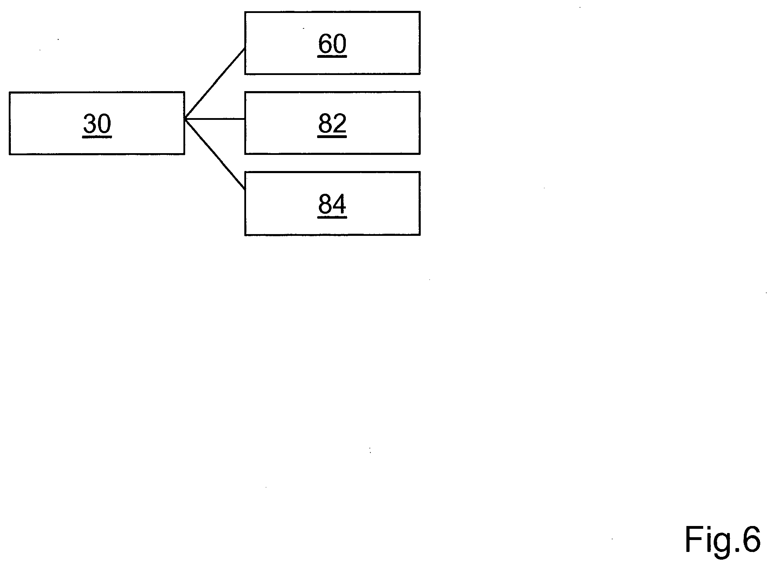

Figure 6 presents a full mode system according to an embodiment of the invention. The full mode system comprises at least the following components: GGSN 30, advertisement system 60, OFCS 82 and OCS 84. This embodiment allows subscriber billing as well as any kind on handling transactions between the advertisers, operator and subscribers. The difference between Figure 6 and Figures 4 and 5 is that the billing interfaces are called through the GGSN 30. This allows that the advertisement system 60 can focus only on choosing next advertisement to be shown, granting the rewards and generating the advertisers' billing data. The functionality of such an embodiment is as follows: GGSN 30 receives traffic, after querying the policy server GGSN 30 realizes that the particular service requires ad-funded interface to be activated together with either OCS 84 or OFCS 82 depending on whether the subscriber is postpaid or prepaid. GGSN 30 forwards the request to the advertisement system 60 which replies with advertisement location. GGSN 30 might initiate the session to the billing systems if needed before redirecting the traffic to the given location and with given options and timer values. After the PDP context gets freed, for example by expiring timer, the GGSN 30 requests reward to be granted. Advertisement system 60 finds a valid reward and grants it. GGSN 30 then uses this amount to be reserved from the OCS 84 if the channel is activated by the policy server. After the quota is used, the GGSN 30 reports the used amount also to the advertisement system 60 and to the billing systems if activated earlier.

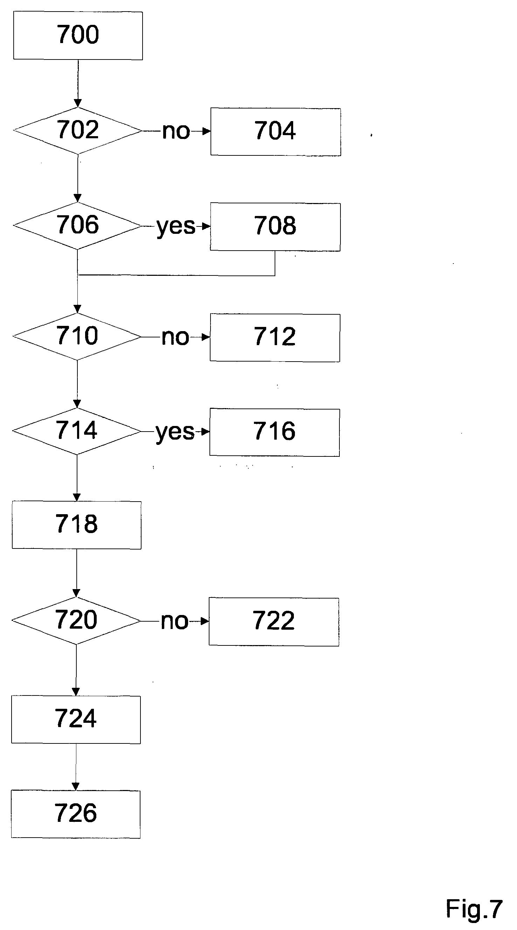

Figure 7 presents one example request handling logic according to an embodiment of the invention. The request handling logic starts with phase 700 when a request is received in the advertisement system. The phase decodes the received message into a format used inside the system. In phase 702 the subscriber is authenticated and authorized. If this fails or the access is denied then the system closes the session in phase 704. The phase 702 includes choosing the id field that is used for authentication (for example MSISDN, IMSI, etc) and it might include a query to blacklist or whitelist numbers. Since the data flow typically uses session based controlling, also the session data has to be verified: phase 702 verifies that the user session exists and is valid. The charging flow typically includes 3 types of messages: one initialize message that starts the charging session, from one to many update messages that comprise the actual session control (i.e. credit control) and one terminate message that then finally ends the session, this is normally triggered when the subscriber stops using the particular service. Note that the same request handling logic is executed by several different requests belonging to the same session during the session lifetime. If the subscriber is authenticated and authorized, the system checks in phase 706 if the request includes quota report. In such a case, a CDR is created in phase 708. The CDR includes the reported quota amounts mapped together with the information of the advertisement that this quota usage belong to. The CDR is written to a file, which is later forwarded to the system that generates the actual bills for the advertisers. Such a system is typically a separate mediation system.

In phase 710 the system checks if the request is asking for more quota. Typically the same request can include both quota reporting and quota requesting as if to say that this is how much I used from the previous quota and now I need more. If no new quota is requested then system just updates the data in the database and responds back with ok status in phase 712. If new quota is requested then the system first checks if the request can be fulfilled with existing rewards in phase 714, and if so the reward is granted to the subscriber in the response message in phase 716. If the subscriber doesn't have valid reward quota in the system then the system decides to show a new advertisement to the subscriber in phase 718. In phase 720 the system checks from advertisement database if there are any advertisements to be shown to subscriber. If no such an advertisement is found for the particular subscriber then a default behaviour is applied: show a default advertisement, deny access, allow access in phase 722. In phase 724 the system has selected the next advertisement to be shown and it sets the required fields in the response message to make the advertisement to be shown with the given options. The response message typically includes redirection URL and parameters such as browsing restrictions, timers, etc. In phase 726 the system updates the advertisement database with information indicating that the subscriber has been shown with respective advertisement and that he/she should be rewarded for that with particular amount of quota,-which will be then found with the next quota request in phase 720. Note that the nature of the logic is to be configurable and therefore in each deployment it will be slightly different, for example on proxy deployment the logic could query the OCS to verify that the subscriber has enough credits etc.

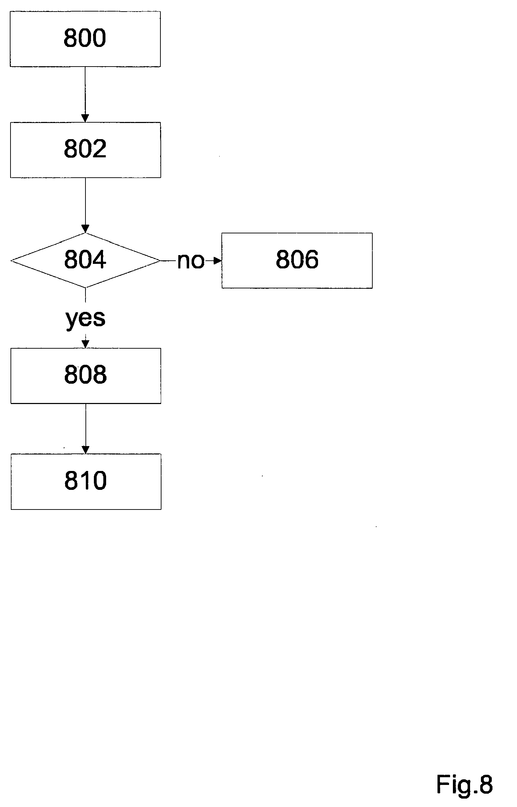

Figure 8 presents an example of activation logic according to an embodiment of the invention. By activation we mean roughly a process and an interaction between the different network elements and modules which starts when a subscriber gets redirected to an dynamic advertisement page, which includes some sort of triggering mechanism, such as a button or timer etc, that is triggered possibly by the subscriber. The triggered event causes the content server to send an activation message towards the advertisement system 60. The advertisement system first activates the reward and starts a process for freeing the subscriber's locked PDP context. The process is described purely from the advertisement system's point of view in terms of a processing logic in Figure 8. In phase 800 the advertisement system 60 receives an activation command from one of the content servers 50 which has previously shown an advertisement to a subscriber 10 and now requests activating the reward to the subscriber 10. The advertisement system 60 translates the request from a format and protocol used by the content server 50 into an internal format of the advertisement system 60. After encoding the received request is forwarded into the interface module 68. In phase 802 the interface module 68 extracts the activation key from the request and performs required actions in case the key has been encrypted or if some other security mechanism is applied. In phase 804 the logic tries to find an unconfirmed reward entry with a given activation key, if this is not found then the execution goes to phase 806, which builds an error message that is returned to the content server 50. If the activation key was valid, the activation logic executes phase 808 which first activates the reward and then starts a process of freeing the locked subscriber's PDP Context by typically sending a re-authorize request towards GGSN 30. In phase 810 the advertisement system 60 builds an OK message to be returned to the content server 50. Note that the described logic is only one possibility that can be deployed.

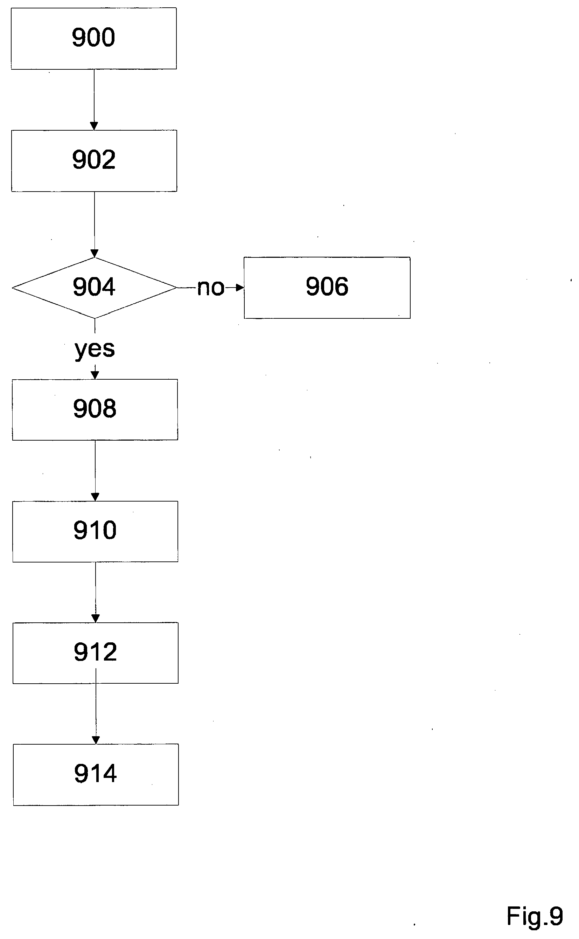

Figure 9 presents an example of data import logic according to an embodiment of the invention. The logic is executed for example when subscriber is asked some additional information that needs to be stored to the advertisement system 60. For example, an operator could update subscribers' areas of interests once a year etc, if desired. In phase 900 the data import interface receives a data import command from one of the content servers 50. The request is translated into a format used inside the system and passed on to the data import logic module. In phase 902 the logic extracts the reference key from the request and performs required functions in case the key has been encrypted etc. In phase 904 the logic queries the key from the internal storage 65 in order to match the subscriber 10 etc that the data is considering. If the key is not present in the database 65 then phase 906 is executed and an error response returned to the content server 50. If the data was present then it is fetched from the storage and next step is executed. In phase 908 the values received in the request are mapped into actual database fields. In phase 910 the data is inserted or updated to the storage. In phase 912 the similar re-authorization is triggered than in authorization case in order to free the subscriber's locked PDP context. In the last phase 914 an OK response is created and returned to the content server 50.

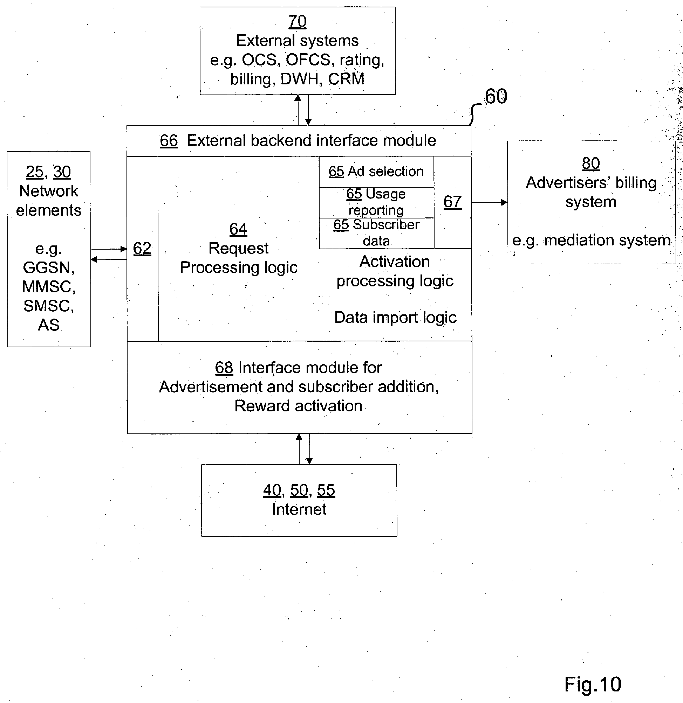

Figure 10 presents the main modules of the advertisement system 60 according to an embodiment of the invention. The system connects to the following external systems: Network elements (e.g. GGSN 30, MMSC, SMSC, AS, etc.) which basically request and report the quota and are the direction where the advertisements and rewards are send to, external systems 70 (e.g. billing, OCS, OFCS, rating engine, data warehouse, CRM) that have some data that needs to be queried or updated, content servers 50 that are mainly located in the public internet 40 which might send some data updates and mediation etc systems 80 which take care of the actual billing of the advertisers. Note that it is possible for multiple network elements to connect to the advertisement system 60 but not all of them necessarily carry the advertisement messages. For example SMSC could connect to the advertisement system 60 but instead of carrying the advertisements, the advertisement system could for example grant free SMS' as rewards of viewing some advertisements i.e. for such network elements the advertisement system 60 would act as a billing system such as OCS. The network elements could be divided roughly into two categories: the ones that carry the advertisement information and the ones that use the advertisement system as a OCS which grants, proxies or redirects the credit control traffic depending on the configuration and the rewards stored into the system. The advertisement system 60 itself contains multiple modules but these modules can be replaced by functionality of another module, configured separately or disabled depending on the actual deployment. The main component is the central logic 64, which can be implemented as a request processing logic module. The request processing logic module of the central logic 64 includes the logic of handling the quota requests obtained from the network element interface 62. Example of a network element interface 62 is a Diameter interface such as Gy or Ro. The request processing logic module uses the other modules in order to decide if a new advertisement should be shown or if a service delivery is allowed i.e. if the subscriber has rewards in the system. It also handles the quota reports. Note that for example the diameter protocol used with data traffic is session based. Therefore a session state has to be maintained in the system.

This information with the temporary rewards are stored into the session data storage module 63 which is accessed by the request processing logic of the central logic 64 to store temporary data. If the request processing logic needs to connect to external systems 70 then external backend interface module 66 is deployed supporting the particular protocol and the network element, in some cases the central logic 64 might need to connect multiple elements on one request. For example it might have to query blacklisted subscribers using LDAP protocol or query subscribers account balance over Gy interface (Diameter protocol) in proxy deployment case. The main purpose of the request processing logic is to decide if an advertisement has to be shown, the actual selection is accomplished by the ad selection module 65 which includes the actual rules how the next advertisement is selected using a storage containing all the advertisements present in the advertisement system 60. The ad selection module 65 responses back to the main logic with the location of the advertisement, possible browsing configurations (e.g. restrictions to limit the subscriber only to certain domain, such as www.comptel.com). The request processing logic of the central logic 64 forwards the URL and the other settings to the GGSN 30 and stores the reward into its storage 65 to be granted later, typically with the next request received to the same session and service-id.

Usage reporting module 65 contains a storage where all the advertisements shown to a particular subscriber 10 are stored for certain period of time. In some deployments it also might include the information of the consumed units and rewards etc. The subscriber data module 65 contains information of the subscribers 10 (for example sex, age, interests, etc) and it is accessed when selecting the next advertisement. Advertiser billing data generation module 67 is responsible for generating data that is needed for billing the actual advertisers, for example by using the data from the different storages 65. The interface module 68 may include an advertisement addition interface module, which is an interface or web GUI that is used to add and maintain the advertisement in the system 60. The interface module 68 may also include a subscriber data addition module, which is an interface or web GUI etc that is used to insert and maintain the subscriber data in the system 60. The interface module 68 may further include a reward activation interface module, which is an interface that is used for receiving reward activation requests from the content servers 50.

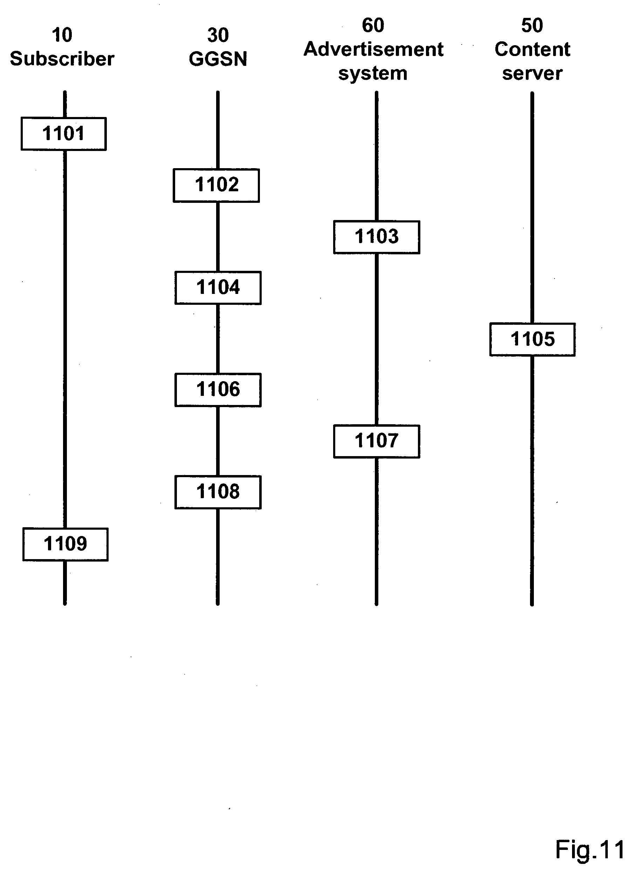

Figure 11 presents a sequence diagram of the interaction between the different elements in static advertisement case according to an embodiment of the invention. In this use case there are not any activation loops from the content server 50 to advertisement system 60 and the advertisements are shown with timer value set causing the PDP context to be freed on expiry of the timer. In phase 1101 subscriber 10 requests service and starts browsing with the terminal. In phase 1102 GGSN 30 identifies the traffic type, enables online charging control and triggers CCR request towards advertisement system 60. In phase 1103 the advertisement system 60 receives the first CCR request of the session. The request processing logic authorizes the subscriber but it doesn't find available reward quota, and so it decides that new advertisement should be shown. The advertisement system 60 selects the next advertisement to be shown based on the subscriber specific data (such as age, sex, location, etc) and stores the reward to the database to be waiting for the next request(s). The advertisement system 60 builds a CCA response with redirect-url and a timer value set plus with possible traffic restriction AVPs (Attribute Value Pair). In phase 1104 GGSN 30 redirects PDP context to the given URL. In phase 1105 Subscriber 10 views the advertisement from the content server 50. The advertisement might contain some interactivity but it is type of static i.e. it doesn't send any activation commands towards the advertisement system 60. In phase 1106 the timer locking for the PDP context expires, GGSN 30 frees the PDP context and triggers new quota requesting CCR towards the advertisement system 60. In phase 1107 the advertisement system 60 finds valid reward quota from its database and it is granted to the subscriber 10 in CCA response. In phase 1108 GGSN 30 allows the granted amount of quota to flow though to the subscriber's session. In phase 1109 subscriber 10 can browse freely until the quota limit is reached causing a new CCR being sent to the advertisement system 60.

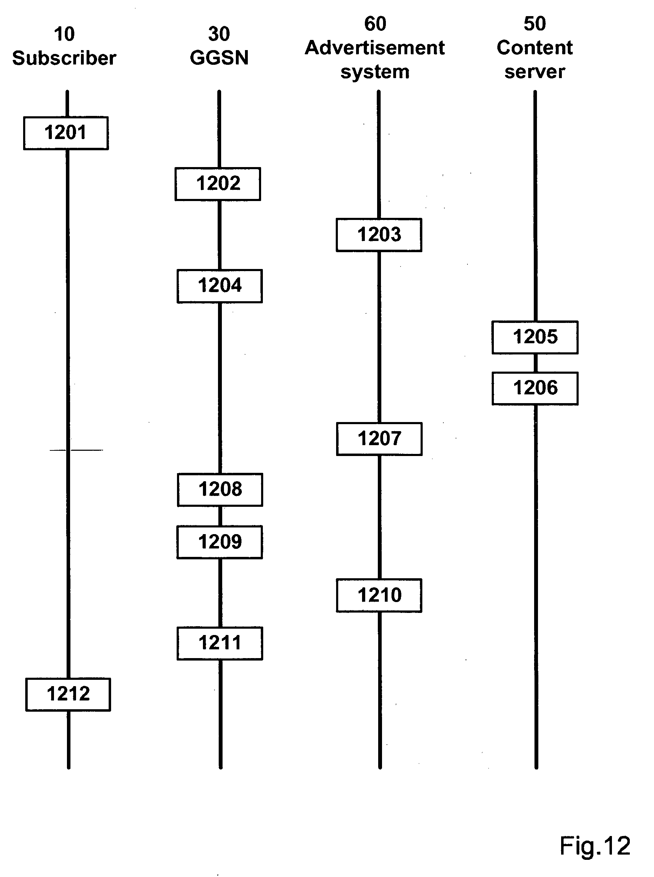

Figure 12 presents a sequence diagram of the interaction between the different elements in dynamic activation advertisement case according to an embodiment of the invention. In phase 1201 subscriber 10 requests a service and starts browsing with his/her terminal. In phase 1202 GGSN 30 identifies the traffic type, enables online charging control on it and triggers the first CCR request towards advertisement system 60. In phase 1203 the advertisement system 60 receives CCR request. The logic doesn't find available reward quota so it decides that new advertisement should be shown. The advertisement system 60 selects the next advertisement to be shown and stores the reward with activation key to the database to be waiting for the activation. The advertisement system 60 builds CCA with redirect-url supplemented with activation key. This is returned with possible traffic restriction AVPs. In phase 1204 GGSN 30 redirects PDP context to the given URL. In phase 1205 subscriber 10 sees the advertisement in the content server 50. In phase 1206 the content servers 50 extracts the activation key from the url parameter and after a certain event such as button press or timer value etc triggers an activation request containing the activation key towards the advertisement system 60. In phase 1207 the advertisement system 60 receives the activation request, it finds the reward with activation key from the database and triggers an RAR command towards GGSN 30. In phase 1208 GGSN 30 receives RAR command, finds a matching active session, responds with successful RAA and frees the PDP context. In phase 1209 GGSN 30 triggers CCR request asking for quota to the freed PDP context. In phase 1210 the advertisement system 60 finds the previously activated quota from its database and it is granted to the subscriber 10 in CCA response. In phase 1211 GGSN 30 allows granted amount of quota to flow through. In phase 1212 subscriber 10 can browse freely until the quota limit is reached causing the GGSN 30 to send new CCR requesting quota and report the previously used amount to the advertisement system 60.

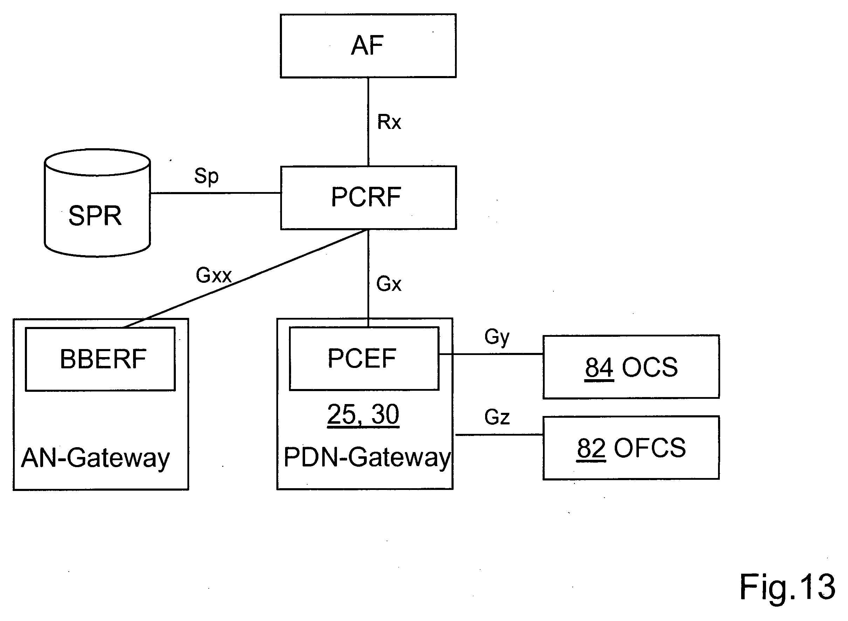

Figure 13 presents a block diagram of the IMS network as specified in 3GPP TS 29.212 v8.0.0 and some components according to an embodiment of the invention. When advertisement system is deployed to the IMS network it typically exists in Gy interface between the PDN-Gateway such as GGSN 30 and OCS 84. In stand-alone mode there are no connections to the billing systems.

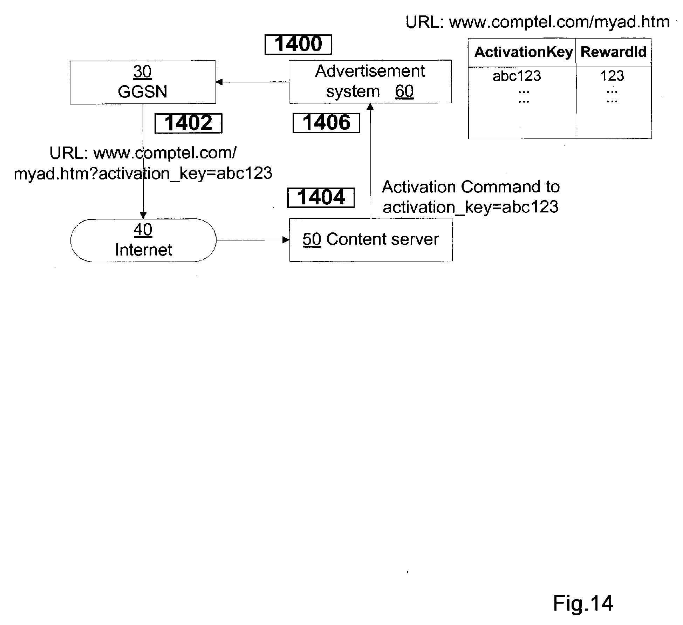

Figure 14 presents a block diagram of the interaction between the different elements during the activation key exchange during a reward activation process according to an embodiment of the invention. An activation key example starts with phase 1400 where the advertisement system 60 has received a quota request from GGSN 30 and decided that the next advertisement is located in www.corilptel.com/myad.htm and that the advertisement is of type 'activateable' i.e. that advertisement system 60 knows to expect an activate command. It creates an activation key such as abc123 and stores into the database with a reference to the non-activated reward. The advertisement system 60 returns redirection to URL supplemented with the activation key as an URL parameter as www.comptel.com?activation_key=abc123. In phase 1402 GGSN 30 redirects the PDP context to the given URL. In phase 1404 content server 50 receives a request to URL with activation key set, it extracts the activation key, shows the advertisement and when the reward should be given it triggers an activation command towards the advertisement system 60 with the given activation key. In phase 1406 the advertisement system 60 receives an activation command with given activation key, which is found from the database with reference to the reward. The advertisement system 60 activates the reward and triggers a reauthorization towards GGSN 30 which then frees the PDP context triggering a new quota request to the same PDP context. The request is received then by the advertisement system 60 which now has valid quota reward waiting for the subscriber.

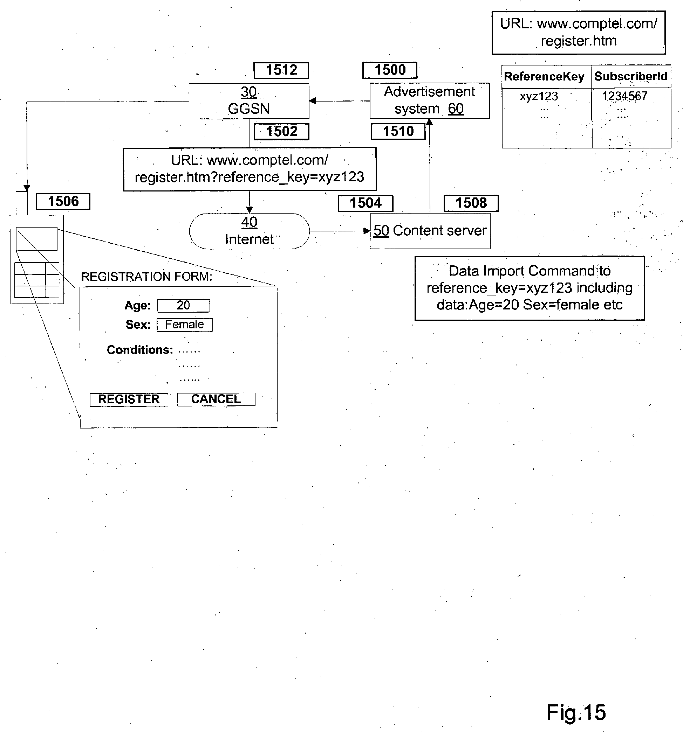

Figure 15 presents a block diagram of the interaction between the different elements during the reference key exchange during a data import process according to an embodiment of the invention. This data collection example uses subscriber registration but this can be whatever data such as subscriber's interests etc. In phase 1500 the advertisement system 60 receives a request from GGSN 30, the request processing logic of the central logic 64 decides that the next redirection URL is a data import page, in the example a subscriber registration form. It creates a reference key similarly than with the activation example, supplements the URL with it and stores the reference key to the DB 65 together with reference to pre-filled information (for example MSISDN, IMSI, etc information that was available in the received request and is needed for further processing). In phase 1502 GGSN 30 redirects the PDP context to the given URL. In phase 1504 content server 50 receives request to the URL, it extracts the reference key, stores it and shows a page containing some sort of form. In phase 1506 subscriber 10 gets redirected to the form, he/she fills the information and presses for example the register button. In phase 1508 the content server 50 checks that all the data is filled and forwards the data in Data Import Command with the reference key towards the advertisement system 60. In phase 1510 the advertisement system 60 receives the Data Import Command, it finds the data stored with reference key, adds the data to the database 65. If required the advertisement system 60 requests re-authorization of the PDP context to the GGSN 30. In phase 1512 GGSN 30 might free the PDP context causing new quota request to the same PDP context to be sent to the advertisement system.

As is apparent from the above discussion, the invention provides a method of controlling access by a subscriber 10 of a mobile network 15 to a first service 55 in a second network 40 via a gateway node 30 between the mobile network 15 and the second network 40.

According to an embodiment of the invention, the method comprises:
- receiving, at a gateway node 30, a request (e.g. 201 or 301) by the subscriber 10 for access to the first service 55,
- identifying (e.g. 202 or 302) the subscriber 10 and the requested first service 55,
- selecting (e.g. 203 or 303) for the subscriber 10 a second service 50 in the second network 40 and a release condition relating to the second service 50,
- redirecting (e.g. 204 or 304) and locking the subscriber 10 to the selected second service 50 and thereby granting access (cf. 205 or 305) only to the selected second service 50 in the second network 40,
- monitoring (cf. 206 or 306) the release condition, and
- when the release condition is fulfilled, releasing (e.g. 207 or 307) the locking of the subscriber 15 and granting access (e.g. 210 or 309) to the first service 55 in the second network 40 via the gateway node 40.

According to an embodiment, the mobile network 25 a 2G, 3G, 4G or IMS network or any combination thereof. Respectively, the gateway node 30 includes at least the corresponding gateway elements, for example a Gateway GPRS Support Node, GGSN; a System Architecture Evolution Gateway, SAE GW; and/or an Application Server, AS.

In a typical embodiment, the second network 40 is the Internet and the first service 55, i.e. the service desired by the subscriber 10, is a service provided in the Internet at a location defined by a first Uniform Resource Locator, URL. In the most typical embodiment, also the second service 50, i.e. the service that the subscriber 10 has to consume in order to gain access to the desired service, is a service provided in the Internet. This service second service 50 is provided at a location defined by a second Uniform Resource Locator, URL. The second URL may define a particular page or a domain within which the subscriber can browse. The second service may be, e.g. an advertisement, a questionnaire or an information page.

In an embodiment, the communications between the subscriber 10 and the first and second services 55, 50 are transmitted within a Packet Data Protocol context, PDP context. This embodiment involves analyzing at least part of the content of the PDP context, for example at the gateway node 30. PDP context is also utilized in order to perform said steps of redirecting, locking and releasing the locking of the subscriber 10.

An embodiment comprises setting a relocking condition relating to at least one property of the communication by the subscriber 10 via the gateway node 30, and after releasing the locking of the subscriber 10 and granting access to the service 55 requested by the subscriber 10:
- monitoring the at least one property of the communication by the subscriber 10 via the gateway node 30,
- comparing the monitored at least one property with the relocking condition, and
- when the monitored at least one property fulfils the relocking condition, performing a next access restriction procedure.

In a further embodiment, the above steps are performed recursively as long as the subscriber 10 continues communication via the gateway node 30. Therefore, the subscriber 10 can be redirected and locked to the second service 50 once again or several times during the subscriber's session. The second service 50 in such repeated redirections may be the same second service 50 than earlier or a new second service 50 different to the previous second service 50 may be selected.

Consequently, an embodiment is also possible, wherein the said next access restriction procedure comprises:
- selecting for the subscriber 10 a next service 50 in the second network 40 and a next release condition relating to the next service 50,
- redirecting and locking the subscriber 10 to the selected next service 50 and thereby granting access only to the selected next service 50 in the second network 40,
- monitoring the next release condition, and
- when the next release condition is fulfilled, releasing the locking of the subscriber 10 and granting access to a service as requested (e.g. service 55) by the subscriber in the second network 40 via the gateway node 30.

The embodiments may comprise monitoring at least one property of the communication by the subscriber 10 via the gateway node 30, as disclosed above. Such properties of communication may include, for example, a connection time, a volume transmitted data, a monetary value of consumed service. The relocking conditions may be defined correspondingly.

The release condition referred to in the embodiments may be defined, for example, as a connection time, a volume transmitted data, a reception of a particular input or stimulus or any acknowledgement by or relating to the second service 50 that the intended second service is consumed or the intended second service has otherwise been performed.

An embodiment may also comprise a screening step, which is performed after the step of identifying the subscriber and before the step of redirecting the subscriber 10. Such a screening step can include making a decision whether to apply the steps of redirecting and locking to the subscriber 10 or not. Thus, the subscriber may opt out from the advertisement service, for instance, and decide to pay for the access. This procedure can also be used such that all the subscriber that have not indicated their willingness to utilize the advertisement service are screened out from the application of the method.

In a further embodiment, the method comprises
- granting service units for the subscriber 10 on the basis of the fulfillment of each of said release conditions,
- monitoring the access by the subscriber 10 to the second network 40 via the gateway node 30,
- deducting the service units on the basis of the monitored access, and
- when all the service units are consumed, proceeding selectively with one of: charging for the access, denying access and/or redirecting the subscriber 10 to a selected next service 50 in order to gain further service units.

The service unit referred in this embodiment may be units of connection time, volume transmitted data or monetary value. The service unit may also be counts of actions, such as a number of permitted entries into a service.

The embodiments also comprise corresponding systems and computer program products adapted to perform the methods according to any one the above-disclosed embodiments. Such embodiments of the system can comprise, a gateway node 30 and an advertisement server 60 connected to the gateway node 30 over an interface 62. The system can also comprise other servers, nodes or elements.

The above description is only to exemplify the invention and is not intended to limit the scope of protection offered by the claims. The claims are also intended to cover the equivalents thereof and not to be construed literally.

## Claims

1. A method of controlling access by a subscriber (10) of a mobile network (15; 25) to a first service (55) in a second network (40) via a gateway node (30) between the mobile network (15; 25) and the second network (40), the method comprising:
receiving, at the gateway node (30), a request by the subscriber (10) for access to the first service (55),
identifying the subscriber (10) and the requested first service (55),
selecting for the subscriber (10) a second service in the second network (40) and a release condition relating to the second service, the second network (40) being the Internet and the second service being a service provided in the Internet at a location defined by a Uniform Resource Locator, URL,
providing the second service to the subscriber, and
monitoring the release condition,
**characterized in that** it further comprises:
the gateway node (30) sending a service request to an advertisement server (60) over a network element interface (62) for the selection of the second service and the release condition, wherein the second service is provided at a content server (50) different from the advertisement server (60),
redirecting and locking the subscriber (10) to the selected second service and thereby granting access only to the selected second service in the second network (40), wherein the redirecting and locking includes setting a redirection command by the advertisement server (60) to the gateway node (30) to the -URL, and
when the release condition is fulfilled, releasing the locking of the subscriber (10) and granting access to the first service (55) in the second network (40) via the gateway node (30).

2. The method of claim 1, wherein the mobile network (15; 25) includes at least one of: a 2G, 3G, 4G and/or IMS network; and the gateway node (30) includes at least one of: a Gateway GPRS Support Node, a System Architecture Evolution Gateway and/or an Application Server.

3. The method of claim 1 or 2, wherein the first service (55) is a service provided in the Internet at a location defined by another Uniform Resource Locator, URL.

4. The method according to any one of claims 1-3, comprising setting a relocking condition relating to at least one property of the communication by the subscriber (10) via the gateway node (30), and after releasing the locking of the subscriber (10) and granting access to the service requested by the subscriber (10):
monitoring the at least one property of the communication by the subscriber (10) via the gateway node (30),
comparing the monitored at least one property with the relocking condition, and
when the monitored at least one property fulfils the relocking condition, performing a next access restriction procedure.

5. The method of claim 4, comprising recursively performing the steps defined in claim 4 as long as the subscriber (10) continues communication via the gateway node (30).

6. The method of claim 4 or 5, wherein the next access restriction procedure comprises:
selecting for the subscriber (10) a next service in the second network (40) and a next release condition relating to the next service,
redirecting and locking the subscriber (10) to the selected next service and thereby granting access only to the selected next service in the second network (40),
monitoring the next release condition, and
when the next release condition is fulfilled, releasing the locking of the subscriber (10) and granting access to a service as requested by the subscriber (10) in the second network (40) via the gateway node (30).

7. The method according to any one of claims 1-6, comprising a screening step after said identifying the subscriber (10) and before said redirecting the subscriber (10), wherein the screening step comprises making a decision whether to apply the steps of redirecting and locking to the subscriber (10) or not.

8. The method according to any one of claims 1-7, comprising:
granting service units for the subscriber (10) on the basis of the fulfilment of each of said release conditions,
monitoring the access by the subscriber (10) to the second network (40) via the gateway node (30),
deducting the service units on the basis of the monitored access, and
when all the service units are consumed, proceeding selectively with one of: charging for the access, denying access and/or redirecting the subscriber (10) to a selected next service in order to gain further service units.

9. A system for controlling access by a subscriber (10) of a mobile network (15; 25) to a first service (55) in a second network (40), wherein the system comprises a gateway node (30) between the mobile network (15; 25) and the second network (40), the system comprising:
means for receiving, at the gateway node (30), a request by the subscriber (10) for access to the first service (55),
means for identifying the subscriber (10) and the requested first service (55),
means for selecting for the subscriber (10) a second service in the second network (40) and a release condition relating to the second service, the second network (40) being the Internet and the second service being a service provided in the Internet at a location defined by a Uniform Resource Locator, URL,
means for providing the second service to the subscriber, and
means for monitoring the release condition,
**characterized in that** it further comprises:
an advertisement server (60) connected to the gateway node (30) over a network element interface (62) and including said means for selecting the second service and the release condition, wherein the second service is provided at a content server (50) different from the advertisement server (60),
wherein said means for providing the second service to the subscriber are adapted to redirect and lock the subscriber to the selected second service and thereby grant access only to the second service in the second network (40), wherein the redirecting and locking includes setting a redirection command by the advertisement server (60) to the gateway node (30) to the URL, and
means for releasing the locking of the subscriber (10) and granting access to the first service (55) in the second network (40) via the gateway node (30), when the release condition is fulfilled.

10. The system of claim 9, wherein
the mobile network (15; 25) includes at least one of: a 2G, 3G, 4G and/or IMS network;
the gateway node (30) includes at least one of: a Gateway GPRS Support Node, a System Architecture Evolution Gateway and/or an Application Server; and
the advertisement server (60) is connected to the gateway node (30) over the network element interface (62) using a Diameter protocol.

11. The system of claim 10, wherein the gateway node (30) is adapted to perform at least the steps of:
receiving the request by the subscriber (10), and
redirecting and locking the subscriber (10) to the selected second service,

12. A computer program product for controlling access by a subscriber (10) of a mobile network (15; 25) to a first service (55) in a second network (40), wherein the computer program product is adapted to perform a method according to any one of claims 1-8 when run in a system comprising a gateway node between the mobile network (15; 25) and the second network (40).

## Patentansprüche

1. Ein Verfahren zum Steuern des Zugriffs eines Teilnehmers (10) eines Mobilfunknetzes (15; 25) auf einen ersten Service (55) in einem zweiten Netz (40) über einen Netzübergangsknoten (30) zwischen dem Mobilfunknetz (15; 25) und dem zweiten Netz (40), das Verfahren umfassend:
Empfangen, an dem Netzübergangsknoten (30), einer Anfrage des Teilnehmers (10) für Zugriff auf den ersten Service (55),
Identifizieren des Teilnehmers (10) und des angeforderten ersten Services (55),
Auswählen, für den Teilnehmer (10), eines zweiten Services in dem zweiten Netz (40) und einer Freigabebedingung bezüglich des zweiten Services, wobei das zweite Netz (40) das Internet ist und der zweite Service ein Service ist, der in dem Internet bereitgestellt wird an einem Ort definiert durch einen einheitlichen Quellenanzeiger, URL,
Bereitstellen des zweiten Services für den Teilnehmer, und
Überwachen der Freigabebedingung,
**dadurch gekennzeichnet, dass** das Verfahren weiterhin umfasst:
der Netzübergangsknoten (30) sendet eine Serviceanfrage an einen Werbungs-Server (60) über eine Netzelement-Schnittstelle (62) für die Auswahl des zweiten Services und der Freigabebedingung, wobei der zweite Service auf einem Inhalts-Server (50) bereitgestellt wird, der von dem Werbungs-Server (60) verschieden ist,
Umleiten und Verriegeln des Teilnehmers (10) auf den ausgewählten zweiten Service und somit Gewähren von Zugriff auf nur den ausgewählten zweiten Service in dem zweiten Netz (40), wobei das Umleiten und Verriegeln umfasst Setzen eines Umleitungsbefehls durch den Werbungs-Server (60) in dem Netzübergangsknoten (30) in der URL, und
wenn die Freigabebedingung erfüllt wird, Freigeben der Verriegelung des Teilnehmers (10) und Gewähren des Zugriffs auf den ersten Service (55) in dem zweiten Netz (40) über den Netzübergangsknoten (30).

2. Das Verfahren nach Anspruch 1, wobei das Mobilfunknetz (15; 25) zumindest eines der Folgenden umfasst: ein 2G, 3G, 4G und/oder IMS Netz; und der Netzübergangsknoten (30) zumindest eines der Folgenden umfasst: ein Netzübergangs-GPRS-Unterstützungsknoten, ein System-Architektur-Entwicklungs-Gateway und/oder einen Anwendungsserver.

3. Das Verfahren nach Anspruch 1 oder 2, wobei der erste Service (55) ein Service ist, der in dem Internet an einem Ort definiert durch einen weiteren einheitlichen Quellenanzeiger, URL, bereitgestellt wird.

4. Das Verfahren nach einem der Ansprüche 1-3, umfassend
Setzen einer Wiederverriegelungsbedingung bezüglich zumindest einer Eigenschaft der Kommunikation des Teilnehmers (10) über den Netzübergangsknoten (30), und nach dem Freigeben der Verriegelung des Teilnehmers (10) und Gewähren des Zugriffs auf den von dem Teilnehmer (10) angeforderten Service:
Überwachen der zumindest einen Eigenschaft der Kommunikation des Teilnehmers (10) über den Netzübergangsknoten (30),
Vergleichen der überwachten zumindest einen Eigenschaft mit der Wiederverriegelungsbedingung, und
wenn die überwachte zumindest eine Eigenschaft die Wiederverriegelungsbedingung erfüllt, Ausführen eines nächsten Zugriffsbeschränkungsverfahrens.

5. Das Verfahren nach Anspruch 4, umfassend rekursives Ausführen der in Anspruch 4 definierten Schritte so lange, wie der Teilnehmer (10) die Kommunikation mit dem Netzübergangsknoten (30) fortsetzt.

6. Das Verfahren nach Anspruch 4 oder 5, wobei das nächste Zugriffsbeschränkungsverfahren umfasst:
Auswählen, für den Teilnehmer (10), eines nächsten Services in dem zweiten Netz (40) und einer nächste Freigabebedingung bezüglich des nächsten Services,
Umleiten und Verriegeln des Teilnehmers (10) auf den ausgewählten nächsten Service und somit Gewähren von Zugriff auf nur den ausgewählten nächsten Service in dem zweiten Netz (40),
Überwachen der nächsten Freigabebedingung, und
wenn die nächste Freigabebedingung erfüllt wird, Freigeben der Verriegelung des Teilnehmers (10) und Gewähren des Zugriffs auf einen Service wie von dem Teilnehmer (10) angefordert in dem zweiten Netz (40) über den Netzübergangsknoten (30).

7. Das Verfahren nach einem der Ansprüche 1-6, umfassend einen Überprüfungsschritt nach der genannten Identifizierung des Teilnehmers (10) und vor dem genannten Umleiten des Teilnehmers (10), wobei der Überprüfungsschritt umfasst Treffen einer Entscheidung ob die Schritte Umleiten und Verriegeln des Teilnehmers (10) angewandt werden sollen oder nicht.

8. Das Verfahren nach einem der Ansprüche 1-7, umfassend:
Bewilligen von Serviceeinheiten für den Teilnehmer (10) auf der Grundlage der Erfüllung jeder der genannten Freigabebedingungen,
Überwachen des Zugriffs des Teilnehmers (10) auf das zweite Netz (40) über den Netzübergangsknoten (30),
Abziehen der Serviceeinheiten auf der Grundlage des überwachten Zugriffs, und
wenn alle Serviceeinheiten aufgebraucht sind, selektiv Fortfahren mit einem der Folgenden: Erfassen von Gebühren für den Zugriff, Verweigern des Zugriffs und/oder Umleiten des Teilnehmers (10) zu einem ausgewählten nächsten Service, um weitere Serviceeinheiten zu erhalten.

9. Ein System zum Steuern des Zugriffs eines Teilnehmers (10) eines Mobilfunknetzes (15; 25) auf einen ersten Service (55) in einem zweiten Netz (40), wobei das System einen Netzübergangsknoten (30) zwischen dem Mobilfunknetz (15; 25) und dem zweiten Netz (40) aufweist, das System umfassend:
Mittel zum Empfangen, an dem Netzübergangsknoten (30), einer Anfrage des Teilnehmers (10) für Zugriff auf den ersten Service (55),
Mittel zum Identifizieren des Teilnehmers (10) und des angeforderten ersten Services (55),
Mittel zum Auswählen, für den Teilnehmer (10), eines zweiten Services in dem zweiten Netz (40) und einer Freigabebedingung bezüglich des zweiten Services, wobei das zweite Netz (40) das Internet ist und der zweite Service ein Service ist, der in dem Internet bereitgestellt wird an einem Ort definiert durch einen einheitlichen Quellenanzeiger, URL,
Mittel zum Bereitstellen des zweiten Services für den Teilnehmer, und
Mittel zum Überwachen der Freigabebedingung,
**dadurch gekennzeichnet, dass** das System weiterhin umfasst:
einen Werbungs-Server (60) verbunden mit dem Netzübergangsknoten (30) über eine Netzelement-Schnittstelle (62) und umfassend Mittel zur Auswahl des zweiten Services und der Freigabebedingung, wobei der zweite Service auf einem Inhalts-Server (50) bereitgestellt wird, der von dem Werbungs-Server (60) verschieden ist,
wobei die genannten Mittel zum Bereitstellen des zweiten Services für den Teilnehmer geeignet sind, zum Umleiten und Verriegeln des Teilnehmers auf den ausgewählten zweiten Service und somit Gewähren von Zugriff auf nur den ausgewählten zweiten Service in dem zweiten Netz (40), wobei das Umleiten und Verriegeln umfasst Setzen eines Umleitungsbefehls durch den Werbungs-Server (60) in dem Netzübergangsknoten (30) in der URL, und
Mittel zum Freigeben der Verriegelung des Teilnehmers (10) und Gewähren des Zugriffs auf den ersten Service (55) in dem zweiten Netz (40) über den Netzübergangsknoten (30), wenn die Freigabebedingung erfüllt ist.

10. Das System nach Anspruch 9, wobei
das Mobilfunknetz (15; 25) zumindest eines der Folgenden umfasst: ein 2G, 3G, 4G und/oder IMS Netz;
der Netzübergangsknoten (30) zumindest eines der Folgenden umfasst: ein Netzübergangs-GPRS-Unterstützungsknoten, ein System-Architektur-Entwicklungs-Gateway und/oder einen Anwendungsserver; und
der Werbungs-Server (60) mit dem Netzübergangsknoten (30) über eine Netzelement-Schnittstelle (62) mittels eines Durchmesser-Protokolls verbunden ist.

11. Das System nach Anspruch 10, wobei der Netzübergangsknoten (30) geeignet ist, zum Ausführen zumindest der Schritte:
Empfangen der Anfrage des Teilnehmers (10), und
Umleiten und Verriegeln des Teilnehmers (10) auf den ausgewählten zweiten Service.

12. Ein Computerprogrammprodukt zum Steuern des Zugriffs eines Teilnehmers (10) eines Mobilfunknetzes (15; 25) auf einen ersten Service (55) in einem zweiten Netz (40), wobei das Computerprogrammprodukt geeignet ist, das Verfahren nach einem der Anspruche 1-8 auszuführen, wenn das Computerprogrammprodukt in einem System ausgeführt wird, das einen Netzübergangsknoten zwischen dem Mobilfunknetz (15; 25) und dem zweiten Netz (40) umfasst.

## Revendications

1. Procédé de commande d'accès par un abonné (10) d'un réseau mobile (15 ; 25) à un premier service (55) dans un second réseau (40) via un noeud de passerelle (30) entre le réseau mobile (15 ; 25) et le second réseau (40), le procédé comprenant les étapes consistant à :
recevoir au niveau du noeud de passerelle (30) une demande de l'abonné (10) pour accéder au premier service (55),
identifier l'abonné (10) et le premier service demandé (55),
sélectionner pour l'abonné (10) un second service dans le second réseau (40) et un état de libération se rapportant au second service, le second réseau (40) étant l'Internet et le second service étant un service fourni dans l'Internet à un emplacement défini par une adresse universelle URL,
fournir le second service à l'abonné et
surveiller l'état de libération,
**caractérisé en ce qu'**il comprend en outre :
le fait que le noeud de passerelle (30) envoie une demande de service à un serveur publicitaire (60) via une interface d'élément de réseau (62) pour la sélection du second service et de l'état de libération, dans lequel le second service est fourni au niveau d'un serveur de contenu (50) différent du serveur publicitaire (60),
la redirection et le verrouillage de l'abonné (10) au second service sélectionné et, par suite, l'accès accordé uniquement au second service sélectionné dans le second réseau (40), dans lequel la redirection et le verrouillage comprennent le réglage d'une instruction de redirection par le serveur publicitaire (60) au noeud de passerelle (30) et à l'URL et,
lorsque l'état de libération est atteint, la libération du verrouillage de l'abonné (10) et l'accès accordé au premier service (55) dans le second réseau (40) via le noeud de passerelle (30).

2. Procédé selon la revendication 1, dans lequel le réseau mobile (15 ; 25) comprend au moins l'un des suivants : un réseau 2G, 3G, 4G et/ou IMS ; et le noeud de passerelle (30) comprend au moins l'un des suivants : un noeud de support GPRS de passerelle, une passerelle évolutive d'architecture de système et/ou un serveur d'application.

3. Procédé selon la revendication 1 ou la revendication 2, dans lequel le premier service (55) est un service fourni dans le cadre d'Internet à un emplacement défini par une autre adresse universelle URL.

4. Procédé selon l'une quelconque des revendications 1 à 3, comprenant le réglage d'un état de reverrouillage se rapportant à au moins une propriété de la communication par l'abonné (10) via le noeud de passerelle (30) et, après avoir libéré le verrouillage de l'abonné (10) et accordé l'accès au service demandé par l'abonné (10), les étapes consistant à :
surveiller la au moins une propriété de la communication par l'abonné (10) via le noeud de passerelle (30),
comparer la au moins une propriété surveillée avec l'état de reverrouillage et,
lorsque la au moins une propriété surveillée atteint l'état de reverrouillage, réaliser une procédure de restriction de l'accès suivant.

5. Procédé selon la revendication 4, comprenant la réalisation récursive des étapes définies dans la revendication 4 aussi longtemps que l'abonné (10) continue la communication via le noeud de passerelle (30).

6. Procédé selon la revendication 4 ou la revendication 5, dans lequel la procédure de restriction de l'accès suivant comprend les étapes consistant à :
sélectionner pour l'abonné (10) un service suivant dans le second réseau (40) et un état de libération suivant se rapportant au service suivant,
rediriger et verrouiller l'abonné (10) sur le service suivant sélectionné et accorder de la sorte un accès uniquement au service suivant sélectionné dans le second réseau (40),
surveiller l'état de libération suivant et,
lorsque l'état de libération suivant est atteint, libérer le verrouillage de l'abonné (10) et accorder un accès à un service tel que demandé par l'abonné (10) dans le second réseau (10) via le noeud de passerelle (30).

7. Procédé selon l'une quelconque des revendications 1 à 6, comprenant une étape de criblage après ladite identification de l'abonné (10) et avant ladite redirection de l'abonné (10), dans lequel l'étape de criblage comprend la prise d'une décision quant à savoir s'il faut appliquer les étapes de redirection et de verrouillage à l'abonné (10) ou non.

8. Procédé selon l'une quelconque des revendications 1 à 7, comprenant les étapes consistant à :
accorder des unités de service à l'abonné (10) sur la base de la satisfaction de chacune desdites conditions de libération,
surveiller l'accès par l'abonné (10) au second réseau (40) via le noeud de passerelle (30),
déduire les unités de service sur la base de l'accès vérifié et,
lorsque toutes les unités de service sont consommées, procéder sélectivement à l'une des opérations suivantes : chargement pour l'accès, déni de l'accès et/ou redirection de l'abonné (10) vers un service sélectionné suivant afin d'obtenir d'autres unités de service.

9. Système de commande d'accès par un abonné (10) d'un réseau mobile (15 ; 25) à un premier service (55) dans un second réseau (40), dans lequel le système comprend un noeud de passerelle (30) entre le réseau mobile (15 ; 25) et le second réseau (40), le système comprenant :
des moyens pour recevoir au niveau du noeud de passerelle (30) une demande de l'abonné (10) pour accéder au premier service (55),
des moyens pour identifier l'abonné (10) et le premier service demandé (55),
des moyens pour sélectionner pour l'abonné (10) un second service dans le second réseau (40) et un état de libération se rapportant au second service, le second réseau (40) étant le réseau Internet et le second service étant un service fourni dans le cadre de l'Internet à un emplacement défini par une adresse universelle URL,
des moyens pour fournir le second service à l'abonné et
des moyens pour surveiller l'état de libération,
**caractérisé en ce qu'**il comprend en outre :
un serveur publicitaire (60) connecté au noeud de passerelle (30) via une interface d'élément de réseau (62) et comprenant lesdits moyens de sélection du second service et de l'état de libération, dans lequel le second service est fourni au niveau d'un serveur de contenu (50) différent du serveur publicitaire (60),
dans lequel lesdits moyens permettant de fournir le second service à l'abonné sont à même de rediriger et de verrouiller l'abonné sur le second service sélectionné et, par suite, d'accorder un accès uniquement au second service dans le second réseau (40), dans lequel la redirection et le verrouillage comprennent le réglage d'une instruction de redirection par le serveur publicitaire (60) vers le noeud de passerelle (30) et l'URL, et
des moyens pour libérer le verrouillage de l'abonné (10) et accorder un accès au premier service (55) dans le second réseau (40) via le noeud de passerelle (30) lorsque l'état de libération est atteint.

10. Système selon la revendication 9, dans lequel :
le réseau mobile (15 ; 25) comprend au moins l'un des suivants : réseau 2G, 3G, 4G et/ou IMS ;
le noeud de passerelle (30) comprend au moins l'un des suivants : noeud de support GPRS de passerelle, passerelle d'évolution architecturale de système et/ou serveur d'application ; et
le serveur publicitaire (60) est connecté au noeud de passerelle (30) via l'interface d'élément de réseau (62) en utilisant un protocole Diameter.

11. Système selon la revendication 10, dans lequel le noeud de passerelle (30) est à même d'effectuer au moins les étapes consistant à :
recevoir la demande par l'abonné (10) et
rediriger et verrouiller l'abonné (10) sur le second service sélectionné.

12. Produit de programmation informatique pour commander l'accès par un abonné (10) d'un réseau mobile (15 ; 25) à un premier service (55) dans un second réseau (40), dans lequel le produit de programmation informatique est à même d'effectuer un procédé selon l'une quelconque des revendications 1 à 8, lorsqu'il tourne sur un système comprenant un noeud de passerelle entre le réseau mobile (15 ; 25) et le second réseau (40).
